# FASCICULE DE BREVET EUROPEEN

(11) **EP 2 978 565 B1**
(45) Date de publication et mention de la délivrance du brevet: **01.11.2017**
(21) Numéro de dépôt: 14711537.2
(22) Date de dépôt: 21.03.2014
(51) Int. Cl.: B23Q 17/09, G01B 7/16, G01L 5/16, B23B 29/04, B23B 29/12, B23B 27/00, G01L 5/00

(54) **PORTE-PLAQUETTE POUR MACHINE-OUTIL**
EINSATZHALTERUNG FÜR EINE WERKZEUGMASCHINE
INSERT HOLDER FOR A MACHINE TOOL

(30) Priorité: 25.03.2013 FR 1352674
(43) Date de publication de la demande: 03.02.2016
(73) Titulaire: Centre Technique de l'Industrie du Décolletage, 74300 Cluses (FR)
(72) Inventeur: JAYR, Cyril, 74800 Saint Sixt (FR); LAURENT, Patrice, 74250 Viuz en Sallaz (FR); BUSI, Roger, 74800 Saint Laurent (FR)
(74) Mandataire: Croonenbroek, Thomas Jakob
(86) Numéro de dépôt international: PCT/EP2014/055762
(87) Numéro de publication internationale: WO 2014/154593

(56) Documents cités:
- EP-A2- 2 051 041
- WO-A1-02/45891
- DE-A1- 4 233 774

## Description

La présente invention concerne un porte-plaquette pour outil de tournage de machine-outil selon le préambule de la revendication 1. L'outil de tournage est par exemple destiné à des opérations de tournage extérieur telles que le chariotage, le dressage de face, le contournage, le filetage, des gorges/tronçonnage ou en multidirectionnel pour des gorges et du chariotage. L'outil de tournage est par exemple destiné à des opérations de tournage intérieur telles que l'alésage, le contournage d'intérieur, le filetage ou des gorges.

L'augmentation de la productivité, les contraintes de qualité de l'usinage liées par exemple à l'état de surface des pièces usinées ainsi que l'évolution des matériaux des pièces à usiner, nécessitent la constante évolution des procédés d'usinage. Afin d'atteindre les nouveaux critères de performances requis, des méthodologies visant à optimiser les conditions de coupe ont été développées. Ainsi, on connaît le concept industriel de couple outil - matière (COM) défini par la norme NFE 66-520 pour la sélection des paramètres de coupe tels que l'avance, la profondeur de passe ou la vitesse de coupe des outils dans la matière à usiner.

Cette norme préconise que les conditions d'usinage soient propres à un couple outil - matière usinée et qu'une étude de l'évolution de paramètres de sortie de coupe, tels que la forme des copeaux, les efforts de coupe ou la puissance de la broche de la machine-outil, permette la détermination d'un domaine d'emploi optimal en termes de conditions de coupe.

Une possibilité de surveillance des paramètres de sortie de coupe consiste à mesurer les variations de puissance électrique absorbée par la broche de la machine-outil. Cette mesure peut être réalisée classiquement par un capteur de type wattmètre. Toutefois, certaines opérations d'usinage telles que les opérations de finition ou semi-finition, requièrent des efforts d'usinage trop faibles pour que les variations de puissance puissent être mesurées de façon fiable et précise par ces capteurs.

Une autre possibilité consiste à mesurer les efforts de coupe exercés sur le porte-plaquette. Pour cela, on connaît des platines de mesure d'effort utilisant des capteurs piézoélectriques sensibles aux déformations superficielles du porte-plaquette. Divers dynamomètres piézoélectriques permettent de mesurer des efforts notamment suivant trois directions de l'espace avec une précision satisfaisante, même pour des opérations nécessitant de faibles efforts d'usinage. Toutefois, ces capteurs peuvent être très onéreux et leur installation impossible dans certaines machines-outils.

On connaît du document EP2051041, un porte-plaquette selon le préambule de la première revendication comportant un porte-plaquette et un dispositif de mesure apte à déterminer un paramètre représentatif d'une action de coupe, monté sur le porte-plaquette.

Un des buts de la présente invention est de proposer un porte-plaquette pour machine-outil pouvant mesurer des efforts de coupe avec une bonne sensibilité, même pour des opérations de finition ou semi-finition et qui ne soit pas trop couteux.

Pour cela, l'invention propose un porte-plaquette pour outil de tournage de machine-outil selon la revendication 1 comportant un corps de porte-plaquette dont la tête est destinée à recevoir une plaquette de coupe, caractérisé en ce qu'au moins deux cavités de mesure sont ménagées dans le corps de porte-plaquette du côté de la tête, lesdites cavités de mesure étant agencées de façon symétrique par rapport à la fibre neutre du corps de porte-plaquette et centrées sur la fibre neutre, les cavités de mesure présentant respectivement un fond plat parallèle à la direction de la composante de l'effort tangentiel de coupe du porte-plaquette à mesurer, et parallèle à la direction longitudinale du corps de porte-plaquette, le porte-plaquette comportant en outre au moins une première jauge de contrainte configurée pour mesurer la déformation du fond plat d'au moins une des deux cavités de mesure.

Dans toutes les opérations de tournage extérieur (chariotage, dressage de face, contournage, filetage, gorges/tronçonnage, multidirectionnel (gorges & chariotage) ou de tournage intérieur (alésage, contournage d'intérieur, filetage, gorges), la direction de la composante de l'effort tangentiel de coupe du porte-plaquette (ou effort de coupe principal) est orthogonale au plan défini par la plaquette de coupe.

Du fait de l'asymétrie de la position de la plaquette de coupe, l'effort de coupe déforme principalement le corps de plaquette en cisaillement. La mesure des déformations en cisaillement du corps de porte-plaquette parallèlement à la direction de la composante de l'effort tangentiel de coupe à mesurer et parallèlement à la direction longitudinale du corps de porte-plaquette, permet d'évaluer l'effort de coupe exercé sur le porte-plaquette. Les premières jauges de contrainte étant agencées au fond des cavités de mesure, celles-ci se retrouvent au plus près de la fibre neutre du porte-plaquette de sorte que l'influence des efforts d'avance, de torsion et de pénétration du porte-plaquette s'en trouve limitée, la mesure traduisant principalement les déformations induites par l'effort tangentiel de coupe.

Les cavités de mesure affinent localement l'épaisseur de l'âme du corps de porte-plaquette dans la région où sont agencées les premières jauges de contrainte. Cet affinement assouplit le corps de porte-plaquette, ce qui permet l'amplification à cet endroit des déformations du corps de porte-plaquette et donc, l'amélioration de la précision des mesures sans détériorer la résistance du porte-plaquette. De plus, les efforts peuvent être ainsi mesurés avec précision par un porte-plaquette permettant l'utilisation de plaquettes de coupe standards disponibles sur le marché sans modifications.

L'épaisseur de l'âme du corps de porte-plaquette entre les fonds plats respectifs des cavités de mesure est par exemple comprise entre 2 et 10 millimètres et la dimension longitudinale de la cavité de mesure est comprise entre 8 et 22 millimètres. On prévoit par exemple que le rapport e/D entre l'épaisseur e de l'âme du corps de porte-plaquette et la dimension longitudinale D de la cavité de mesure soit compris entre 0,1 et 0,85.

Plus précisément, l'épaisseur de l'âme du corps de porte-plaquette entre les fonds plats respectifs des cavités de mesure est par exemple comprise entre 4 et 8 millimètres et la dimension longitudinale de la cavité de mesure est comprise entre 10 et 20 millimètres. On prévoit par exemple que le rapport e/D entre l'épaisseur e de l'âme du corps de porte-plaquette et la dimension longitudinale D de la cavité de mesure soit compris entre 0,3 et 0,5.

L'épaisseur de l'âme du corps de porte-plaquette et la longueur de la dimension longitudinale des cavités de mesure détermine la rigidité du corps de porte-plaquette. Le rapport doit être un bon compromis entre une épaisseur d'âme du corps de porte-plaquette trop faible qui risquerait de faire entrer le porte-plaquette en vibration et une épaisseur d'âme du corps de porte-plaquette trop épaisse qui diminuerait la sensibilité des mesures. L'épaisseur de la paroi de part et d'autre des cavités de mesure est alors relativement mince, ce qui permet également de minimiser l'influence de la flexion liée à l'effort d'avance.

Le porte-plaquette comporte par exemple au moins quatre premières jauges de contraintes reliées en pont complet de Wheatstone, les premières jauges de contraintes raccordées dans des branches opposées du pont de Wheatstone étant agencées dans une cavité de mesure distincte et se superposant de part et d'autre de l'âme du corps de porte-plaquette. Ce câblage permet de limiter l'influence des déformations du porte-plaquette liées à l'effort d'avance, de torsion ou de pénétration, sur la mesure de l'effort tangentiel de coupe.

Les premières jauges de contraintes sont par exemple associées deux à deux pour mesurer la déformation du fond plat en formant une jauge double « sapin pour laquelle les directions longitudinales des fils résistifs des deux premières jauges de contrainte respectives sont agencés « en V », lesdits fils résistifs étant sensiblement centrés par rapport à la fibre neutre et alignés sur la fibre neutre. Les jauges sapin n'étant sensibles qu'au cisaillement, on limite ainsi l'influence des autres déformations sur la mesure de l'effort tangentiel de coupe. On limite ainsi notamment les efforts en torsion du porte-plaquette dû à la position asymétrique de la plaquette de coupe.

Selon un exemple particulier de réalisation, le corps de porte-plaquette présente également au moins une paroi latérale plane perpendiculaire à la direction de la composante de l'effort de coupe du porte-plaquette, le porte-plaquette comportant en outre au moins une deuxième jauge de contrainte configurée pour mesurer la déformation d'au moins une paroi latérale plane. On peut donc mesurer d'autres types d'efforts, tel qu'un effort d'avance en chariotage ou un effort de pénétration en dressage de face, indépendamment de la mesure de l'effort tangentiel de coupe.

Les parois latérales planes sont par exemple formées dans des parois latérales des cavités de mesure. Ainsi, deux cavités de mesure sont nécessaires plutôt que quatre.

Par exemple, le porte-plaquette comporte au moins quatre deuxièmes jauges de contraintes reliées en pont complet de Wheatstone, les deuxièmes jauges de contraintes raccordées dans des branches opposées du pont de Wheatstone étant agencées l'une en regard de l'autre dans la direction de la composante de l'effort tangentiel de coupe du porte-plaquette et configurées pour mesurer une paroi latérale plane. Avec ce câblage particulier, il est possible de mesurer d'autres types d'efforts seuls exercés sur le porte-plaquette, tel qu'un effort d'avance en chariotage ou un effort de pénétration en dressage de face, en limitant l'influence des efforts de coupe tangentiel ou de torsion.

Selon un autre exemple de réalisation particulier, le porte-plaquette comporte :
- deux cavités de mesure supplémentaires ménagées dans le corps de porte-plaquette présentant respectivement au moins un fond plat aligné et décalé longitudinalement du fond plat des cavités de mesure, et
- au moins un troisième capteur de déformation configuré pour mesurer la déformation d'au moins un fond plat d'une cavité de mesure et la déformation d'au moins un fond plat d'une cavité de mesure supplémentaire.

Ainsi, on peut mesurer, par exemple un effort de pénétration en chariotage, indépendamment de la mesure de l'effort tangentiel de coupe.

Le porte-plaquette peut comporter au moins une plaque de fermeture pour fermer de manière étanche les cavités de mesure. Les plaques de fermeture permettent de protéger les jauges de contraintes, notamment des projections d'huile ou copeaux.

Un conduit interne raccordé aux cavités de mesure peut être ménagé dans le corps de porte-plaquette pour le passage des fils de connexion du(des) jauge(s) de contrainte, ledit conduit interne débouchant en bout du corps de porte-plaquette. Le raccordement des jauges de contrainte est ainsi protégé dans le corps de porte-plaquette et le porte-plaquette ne comporte plus qu'un unique câble de sortie pour le raccordement à un dispositif d'acquisition de mesures.

D'autres objets, avantages et caractéristiques apparaîtront à la lecture de la description de l'invention, ainsi que des dessins annexés sur lesquels :
- la figure 1 représente une vue en coupe de dessus d'un premier mode de réalisation d'un porte-plaquette pour outil de chariotage et d'une pièce à usiner,
- la figure 2 est une vue schématique d'un détail du porte-plaquette de la figure 1,
- la figure 3 montre une vue en coupe de face d'une section droite d'un corps de porte-plaquette selon l'axe X,
- la figure 4 montre une vue en perspective partielle de côté d'un porte-plaquette sans plaque de fermeture,
- la figure 5 montre une vue de côté du porte-plaquette de la figure 1 sans plaquette de coupe et sans plaque de fermeture,
- la figure 6a représente une vue schématique partielle en coupe et vue de dessus d'un porte-plaquette sur lequel on a localisé des premières jauges de contrainte et sur lequel on a représenté la direction d'un effort tangentiel de coupe exercé sur le porte-plaquette,
- la figure 6b représente un exemple de câblage des premières jauges de contrainte du porte-plaquette de la figure 6a et sur lequel on a représenté des variations de résistance et le déséquilibre du pont de Wheatstone sous l'effet d'une flexion due à un effort tangentiel de coupe,
- la figure 7a est une vue analogue à la figure 6a sur laquelle on a représenté la direction d'un effort d'avance exercé sur le corps de porte-plaquette,
- la figure 7b est une vue analogue à la figure 6b sur laquelle on a représenté des variations de résistance sous l'effet d'une flexion due à un effort d'avance,
- la figure 8a est une vue analogue à la figure 6a sur laquelle on a représenté la direction d'un effort en torsion exercé sur le corps de porte-plaquette, l'effort de torsion étant lié à l'application de l'effort tangentiel de coupe en un point éloigné de la fibre neutre,
- la figure 8b est une vue analogue à la figure 6b sur laquelle on a représenté des variations de résistance sous l'effet d'un effort en torsion,
- la figure 9a est une vue analogue à la figure 6a sur laquelle on a représenté la direction d'un effort de pénétration exercé sur le corps de porte-plaquette,
- la figure 9b est une vue analogue à la figure 6b sur laquelle on a représenté le sens de variation de résistance des jauges de contrainte sous l'effet d'un effort de pénétration,
- la figure 10 représente un exemple de porte-plaquette et d'une pièce à usiner en tournage intérieur avec l'axe Z parallèle à la direction de la composante de l'effort d'avance du porte-plaquette,
- la figure 11 représente un autre exemple de porte-plaquette et d'une pièce à usiner en tournage intérieur avec l'axe Z perpendiculaire à la direction de la composante de l'effort d'avance du porte-plaquette,
- la figure 12a est une vue en perspective de côté d'un deuxième mode de réalisation d'un porte-plaquette,
- la figure 12b représente un exemple de câblage des deuxièmes jauges de contrainte,
- la figure 13a est une vue en perspective de côté d'un troisième mode de réalisation d'un porte-plaquette,
- la figure 13b représente un exemple de câblage des troisièmes jauges de contrainte, et
- la figure 14 représente un exemple de porte-plaquette et d'une pièce à usiner par dressage de face.

Sur ces figures, les éléments identiques portent les mêmes numéros de référence. Dans la suite de la description, on adoptera à titre non limitatif des directions longitudinales, transversales et verticales indiquées sur cette figure par le trièdre (X, Y, Z) fixe par rapport au porte-plaquette.

Pour toutes les opérations de tournage, extérieures ou intérieures :
- l'axe Y est parallèle à la direction verticale de la composante de l'effort tangentiel de coupe du porte-plaquette (ou effort de coupe principal), orthogonale au plan (X, Z) défini par la plaquette de coupe, et
- l'axe Z est parallèle à l'axe de rotation de la pièce à usiner.

En tournage extérieur, l'axe X correspond à la direction parallèle à la direction principale longitudinale du corps de porte-plaquette.

En chariotage (tournage extérieur), l'axe X est parallèle à la direction de la composante de l'effort de pénétration du porte-plaquette et l'axe Z est parallèle à la direction de la composante de l'effort d'avance du porte-plaquette.

En dressage de face (tournage extérieur), l'axe X est parallèle à la direction de la composante de l'effort d'avance du porte-plaquette et l'axe Z est parallèle à la direction de la composante de l'effort de pénétration du porte-plaquette.

En tournage intérieur, l'axe Z parallèle à l'axe de rotation de la pièce à usiner est parallèle à la direction principale longitudinale du corps de porte-plaquette. L'axe Z peut être parallèle ou perpendiculaire à la direction de la composante de l'effort d'avance du porte-plaquette.

L'invention concerne un porte-plaquette 1 destiné à être monté dans un porte-outil pour outil de tournage, lui-même destiné à être monté dans une machine-outil.

L'outil de tournage est par exemple destiné à des opérations de tournage extérieur telles que le chariotage, le dressage de face, le contournage, le filetage, des gorges/tronçonnage ou en multidirectionnel pour des gorges et du chariotage. L'outil de tournage peut aussi être destiné à des opérations de tournage intérieur telles que l'alésage, le contournage d'intérieur, le filetage ou des gorges.

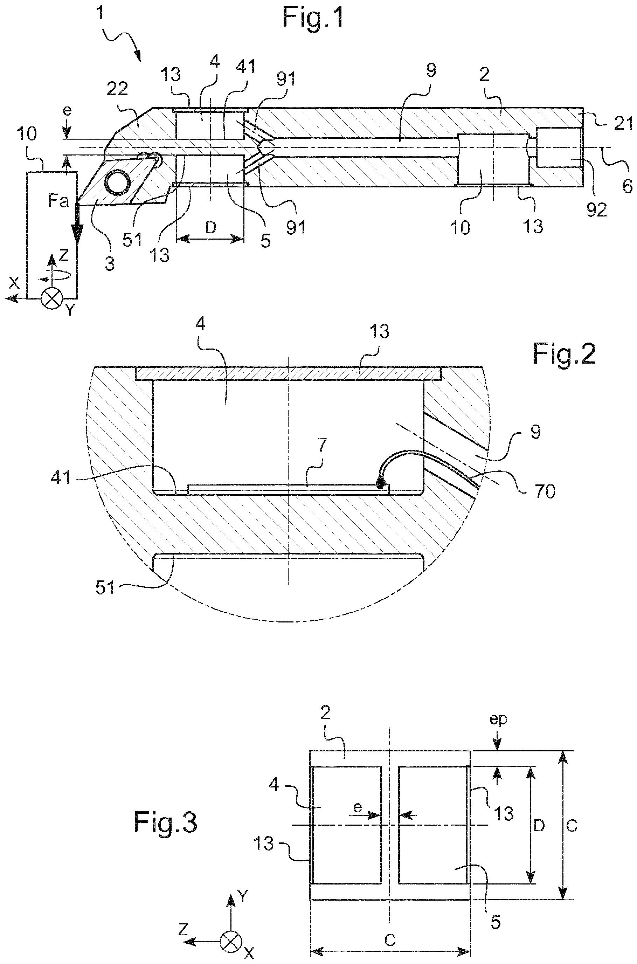

La figure 1 illustre un premier mode de réalisation du porte-plaquette 1.

Le porte-plaquette 1 comporte un corps de porte-plaquette 2 présentant une portion de maintien 21 et une tête 22. Le corps de porte-plaquette 2 est par exemple en acier inoxydable. La portion de maintien 21 est par exemple de forme générale parallélépipédique rectangle et présente par exemple une section droite carrée.

La tête 22 est destinée à recevoir une plaquette de coupe 3 pour l'usinage d'une pièce 10. La plaquette de coupe 3 est fixée sur un côté de la tête 22. La plaquette de coupe 3, qui présente une forme rhombique sur l'exemple de la figure 1, est fixée au corps de porte-plaquette 2 de façon classique, elle est par exemple brasée ou montée de manière amovible. Le corps de porte-plaquette 2 est donc asymétrique notamment du fait de la position de la plaquette de coupe 3 et du fait de la forme de la tête 22.

Deux cavités de mesure 4, 5 sont ménagées dans le corps de porte-plaquette 2, du côté de la tête 22. Plus précisément, les cavités de mesure 4, 5 sont ménagées dans la portion de maintien 21 symétrique du corps de porte-plaquette 2, au plus près de la tête 22, pour être situées au plus près de la plaquette de coupe 3.

Les cavités de mesure 4, 5 sont agencées symétriquement par rapport à la fibre neutre 6 du corps de porte-plaquette 2. Elles sont centrées sur la fibre neutre 6, c'est-à-dire qu'elles sont elles-mêmes respectivement agencées symétriquement par rapport à la fibre neutre 6.

En cours d'usinage, plusieurs efforts s'exercent sur le porte-plaquette 1 : on distingue notamment l'effort tangentiel de coupe Fc, l'effort d'avance Fa, l'effort de pénétration et les efforts de torsion.

Pour une opération de chariotage telle que représentée sur la figure 1, la déformation selon l'axe Y est principalement due à une flexion Fc qui est l'effet principal de l'effort de coupe exercé sur le porte-plaquette. C'est cette flexion Fc ou effort tangentiel de coupe, que l'on cherche principalement à déterminer avec précision pour l'optimisation des paramètres de coupe.

En chariotage, la déformation selon l'axe Z est principalement due à l'effort d'avance Fa (figure 1).

En chariotage, la déformation selon l'axe X est principalement liée à l'effort de pénétration de la plaquette de coupe 5 dans la pièce à usiner.

D'après la théorie des poutres, la fibre neutre 6 est une courbe moyenne fictive qui s'étend dans la direction longitudinale du porte-plaquette 1 en passant par le centre de gravité des sections droites de la portion de maintien 21 du corps de porte-plaquette 2.

Les cavités de mesure 4, 5 présentent respectivement un fond plat 41, 51 dans le plan (X, Y) parallèle à la direction verticale Y de la composante de l'effort tangentiel de coupe du porte-plaquette 1 que l'on souhaite mesurer, et parallèle à la direction longitudinale X du corps de porte-plaquette 2.

Le porte-plaquette 1 comporte en outre au moins une première jauge de contrainte 7 configurée pour mesurer la déformation du fond plat 41, 51 d'au moins une des deux cavités de mesure 4, 5. Les fils résistifs des jauges de contrainte soumis à une extension ou une compression, se déforment traduisant une déformation mécanique en variation de résistance électrique. Les jauges de contrainte permettent ainsi de mesurer des déformations avec une bonne précision, à moindre coût et sont faciles à agencer car il suffit de les coller sur les surfaces planes dont on souhaite mesurer la déformation.

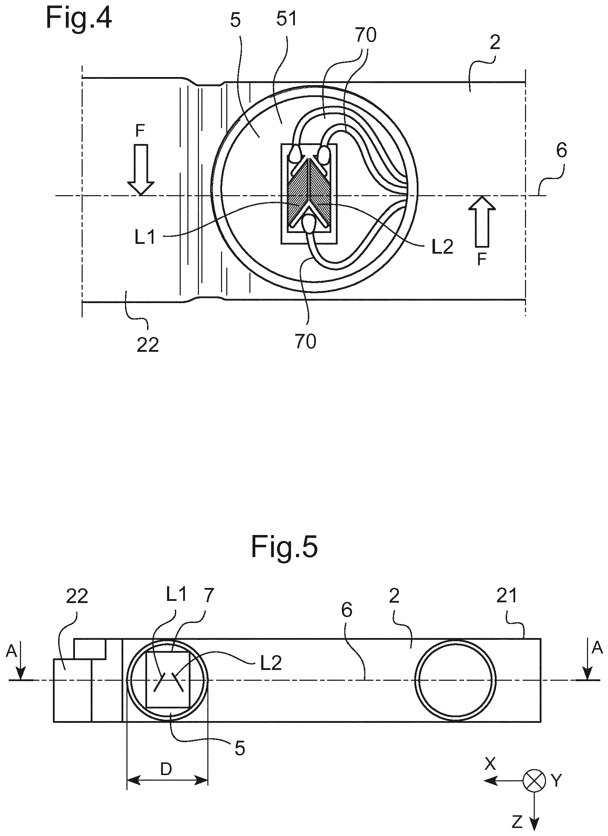

Du fait de l'asymétrie du porte-plaquette, l'effort tangentiel de coupe déforme principalement le corps de plaquette en cisaillement (voir l'illustration du cisaillement en figure 4 par les flèches F). La mesure des déformations en cisaillement du corps de porte-plaquette 2 parallèlement à la direction verticale Y de la composante de l'effort tangentiel de coupe que l'on souhaite mesurer, permet d'évaluer l'effort tangentiel de coupe exercé sur le porte-plaquette 1.

Les premières jauges de contrainte étant agencées au fond des cavités de mesure 4, 5, celles-ci se retrouvent au plus près de la fibre neutre 6 du porte-plaquette 1 de sorte que l'influence des efforts d'avance, de torsion et de pénétration du porte-plaquette s'en trouve limitée, la mesure traduisant principalement les déformations induites par l'effort tangentiel de coupe.

Les cavités de mesure 4, 5 affinent localement l'épaisseur e de l'âme du corps de porte-plaquette 2 dans la région où sont agencées les premières jauges de contrainte. Cet affinement assouplit le corps de porte-plaquette 2, ce qui permet l'amplification à cet endroit des déformations du corps de porte-plaquette 2 et donc, l'amélioration de la précision des mesures sans détériorer la résistance du porte-plaquette. De plus, les efforts peuvent être mesurés avec précision tout en permettant l'utilisation de plaquettes de coupe standards disponibles sur le marché sans modifications.

L'épaisseur e de l'âme du corps de porte-plaquette 2 entre les fonds plats 41, 51 respectifs des cavités de mesure 4, 5 est par exemple comprise entre 4 et 8 millimètres (figures 1, 3 et 5). La dimension longitudinale D des cavités de mesure 4, 5 dans la direction longitudinale X est par exemple comprise entre 10 et 20 millimètres.

On considère par exemple un corps de porte plaquette 2 de forme générale parallélépipédique rectangle présentant une section droite carrée et des cavités de mesure 4, 5 présentant une forme générale cylindrique. L'axe des cavités de mesure 4, 5 cylindriques (ou hauteur) s'étend suivant une direction parallèle à l'axe de rotation Z.

Pour une section carrée du corps de porte-plaquette 2 présentant un côté C de longueur de l'ordre de 12 millimètres, l'épaisseur e de l'âme du corps de porte-plaquette 2 est par exemple de l'ordre de 4 millimètres et le diamètre D des cavités de mesure 4, 5 est de l'ordre de 10,5 millimètres pour un porte-plaquette présentant une longueur de 80 millimètres. Le rapport e/D entre l'épaisseur e de l'âme du corps de porte-plaquette et la dimension longitudinale D de la cavité de mesure est alors de l'ordre de 0,38.

Pour une section carrée du corps de porte-plaquette 2 présentant un côté C de longueur de l'ordre de 16 millimètres, l'épaisseur e de l'âme du corps de porte-plaquette 2 est par exemple de l'ordre de 6 millimètres et le diamètre D des cavités de mesure 4, 5 est de l'ordre de 13,5 millimètres pour un porte-plaquette présentant une longueur de 100 millimètres. Le rapport e/D entre l'épaisseur e de l'âme du corps de porte-plaquette et la dimension longitudinale D de la cavité de mesure est alors de l'ordre de 0,44.

Pour une section carrée du corps de porte-plaquette 2 présentant un côté C de longueur de l'ordre de 25 millimètres, l'épaisseur e de l'âme du corps de porte-plaquette 2 est par exemple de l'ordre de 8 millimètres et le diamètre D des cavités de mesure 4, 5 est de l'ordre de 20 millimètres pour un porte-plaquette présentant une longueur de 150 millimètres. Le rapport e/D entre l'épaisseur e de l'âme du corps de porte-plaquette et la dimension longitudinale D de la cavité de mesure est alors de l'ordre de 0,4.

Le rapport entre l'épaisseur e de l'âme du corps de porte-plaquette 2 et la longueur D de la dimension longitudinale des cavités de mesure 4, 5 détermine la rigidité du corps de porte-plaquette qui doit être un bon compromis entre une épaisseur e d'âme du corps de porte-plaquette 2 trop faible risquant de faire entrer le porte-plaquette 1 en vibration et une épaisseur d'âme du corps de porte-plaquette 2 trop épaisse qui diminuerait la sensibilité des mesures. L'épaisseur ep de la paroi de part et d'autre des cavités de mesure 4, 5 dans la direction longitudinale X est alors relativement mince (entre 0.75 et 2.5 millimètres), ce qui permet également de minimiser l'influence de la flexion liée à l'effort d'avance.

Le porte-plaquette 1 comporte par exemple une unique première jauge de contrainte 7 agencée dans une cavité de mesure 4.

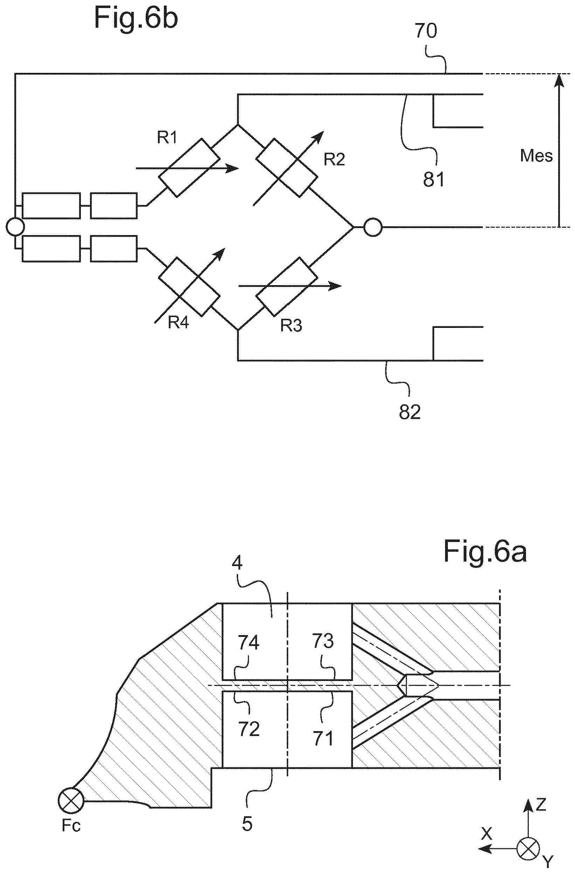

Pour une meilleure précision, le porte-plaquette 1 comporte deux premières jauges de contrainte 71, 72, 73, 74 par cavité de mesure (figures 6a).

On prévoit par exemple de ménager un conduit interne 9 raccordé aux cavités de mesure 4, 5 dans le corps de porte-plaquette 2 pour le passage des fils de connexion 70 des premières jauges de contrainte 71, 72, 73, 74.

Le conduit interne 9 s'étend longitudinalement dans le corps de porte-plaquette 2 entre une entrée 91 à deux branches « en Y » raccordant les cavités de mesure 4, 5 et une sortie 92 débouchant en bout du corps de porte-plaquette 2 (figure 1). On peut prévoir également de ménager une cavité de câblage 10 dans la portion de maintien 21 du corps de porte-plaquette 2, entre l'entrée à deux branches 91 et la sortie 92 du conduit interne 9. La cavité de câblage 10 permet de raccorder les fils de connexion 70 des premières jauges de contraintes 71, 72, 73, 74 à un câble de sortie 73 lors du montage des jauges. Le raccordement des jauges de contrainte est ainsi protégé dans le corps de porte-plaquette 2 et le porte-plaquette 1 ne comporte plus qu'un unique câble de sortie 73 pour le raccordement à un dispositif d'acquisition de mesures.

On utilise par exemple des jauges de contrainte doubles dites « chevron » ou « sapin » comme représenté sur les figures 4 et 5. Une jauge sapin comporte deux jauges de contrainte dont les directions longitudinales L1, L2 respectives sont concourantes « en V » en définissant un angle par exemple compris entre 80 et 100°, comme par exemple un angle de 90°. Du fait de l'orientation des fils résistifs en biais, la jauge sapin est sensible aux déformations de cisaillement (figure 4), on limite ainsi l'influence des autres déformations sur la mesure de l'effort tangentiel de coupe.

Les jauges sapin sont agencées sur le fond plat respectif 41, 51, sur la projection de la fibre neutre 6, de manière à limiter l'influence notamment des efforts en torsion du porte-plaquette dus à la position asymétrique de la plaquette de coupe 3. Les jauges sapin sont par exemple sensiblement centrées et alignées sur cette projection.

Pour limiter l'influence des efforts autres que celui tangentiel de coupe, on prévoit également un câblage des premières jauges de contraintes 71, 72, 73, 74 en pont complet de Wheatstone (figure 6b).

Par exemple et comme représenté sur la figure 6a, une première jauge sapin 71, 72 est agencée dans une première cavité de mesure 5 et une deuxième jauge sapin 73, 74 est agencée dans une deuxième cavité de mesure 4.

Les jauges sapin 71, 72 et 73, 74 sont superposées de part et d'autre de l'âme du corps de porte-plaquette 2 de sorte que l'orientation des fils résistifs des jauges sapin soit sensiblement superposée.

Ainsi, les premières jauges de contraintes 71, 73 raccordées dans des branches opposées du pont de Wheatstone sont agencées dans une cavité de mesure 4, 5 distincte et se superposent de part et d'autre de l'âme du corps de porte-plaquette 2. De même, les premières jauges de contraintes 72, 74 raccordées dans des branches opposées du pont de Wheatstone sont agencées dans une cavité de mesure distincte 4, 5 et se superposent de part et d'autre de l'âme du corps de porte-plaquette 2.

Plus précisément, la jonction entre les deux résistances R1 et R2 des premières jauges de contrainte 71, 72 de la première jauge sapin agencée dans la première cavité de mesure 5 sont raccordées à une première borne d'alimentation 81. La jonction entre les deux résistances R3 et R4 des premières jauges de contrainte 73, 74 de la deuxième jauge sapin agencée dans la deuxième cavité de mesure 4 sont raccordées à une deuxième borne d'alimentation 82.

La mesure est réalisée d'une part, entre la jonction entre la résistance R1 de la première jauge sapin et la résistance R4 de la deuxième jauge sapin et d'autre part, entre la jonction entre la résistance R2 de la première jauge sapin et la résistance R3 de la deuxième jauge sapin.

Les résistances R1, R2, R3, R4 des quatre jauges de contraintes 71, 72, 73, 74 présentent toutes une valeur sensiblement égale de sorte que le pont de Wheatstone a, à l'équilibre, une tension de mesure Mes nulle lorsqu'il est alimenté par une source de tension entre les bornes d'alimentation 81, 82. Autrement dit, R1*R3=R2*R4.

On a représenté en figure 6a, un effort tangentiel de coupe Fc exercé sur le porte-plaquette 1. L'effort tangentiel de coupe Fc applique une poussée verticale sur la plaquette de coupe 3 perpendiculaire au plan (X, Z) défini par la plaquette de coupe 3.

Ce sont surtout les fils résistifs des jauges de contrainte 72 et 74 agencées à l'avant du porte-plaquette 1 au plus près de la tête 22 qui subissent les déformations en cisaillement du porte-plaquette 1.

Le pont de Wheatstone se déséquilibre comme schématisé sur la figure 6b. En supposant qu'en s'étirant, la résistance des fils résistifs augmente et réciproquement, les déformations des jauges de contrainte 72 et 74 agencées à l'avant l'une en dessous de l'autre dans une cavité de mesure 4, 5 respective font augmenter les deux résistances R2 et R4 raccordées sur des branches opposées du pont de Wheatstone. La déformation des jauges de contrainte 71 et 73 agencées plus en arrière sur le corps du porte-plaquette 2 est moins importante. On obtient donc R1*R3<R2*R4. Le déséquilibre du pont de Wheatstone fait apparaître une tension de sortie Mes non nulle représentative de l'effort tangentiel de coupe.

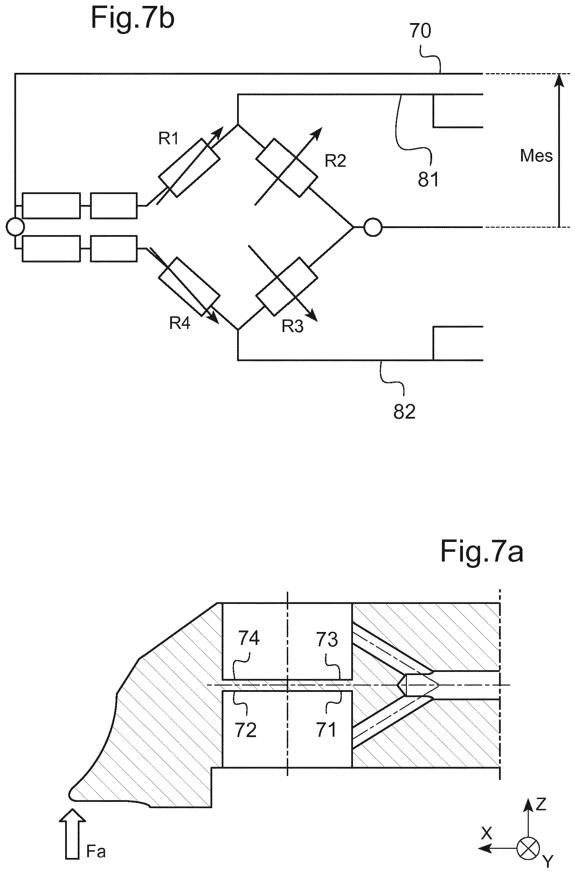

On a représenté en figure 7a, un effort d'avance Fa simultané à l'effort tangentiel de coupe Fc. L'effort d'avance Fa applique une poussée transversale sur la plaquette de coupe 3 perpendiculaire à la direction longitudinale X du porte-plaquette 1 et coplanaire au plan (X, Z) défini par la plaquette de coupe 3.

Les premières jauges de contrainte 73 et 74 agencées dans la deuxième cavité de mesure 4 du porte-plaquette 1 sont déformées en compression faisant diminuer les deux résistances R3 et R4 respectives. Les premières jauges de contrainte 71 et 72 agencées dans la première cavité de mesure 5 du porte-plaquette 1 sont déformées en extension faisant augmenter les deux résistances adjacentes R1 et R2 respectives.

La diminution des résistances R3 et R4 dans la deuxième cavité de mesure 4 est sensiblement égale à l'augmentation des résistances R1 et R2 dans la première cavité de mesure 5. On conserve donc sensiblement R1*R3=R2*R4. Par conséquent, la déformation du porte-plaquette liée à l'effort de flexion dû à l'avance ne déséquilibre quasiment pas le pont de Wheatstone (figure 7b).

Ce câblage permet donc de limiter l'influence de la flexion exercée sur le porte-plaquette liée à l'effort d'avance, sur la mesure de l'effort tangentiel de coupe.

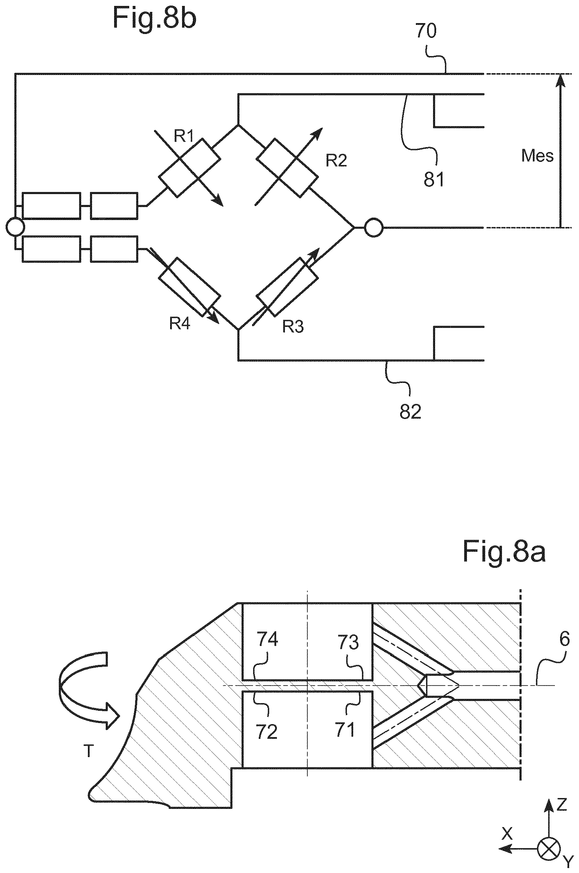

On a représenté en figure 8a, l'effort en torsion T qui peut être exercé sur le porte-plaquette 1 autour de la fibre neutre 6 simultanément à l'effort tangentiel de coupe.

Les jauges de contraintes 72 et 73 agencées diagonalement dans les cavités de mesure 4, 5 sont déformées en extension faisant augmenter les respectivement les résistances R2 et R3. Les jauges de contraintes 71 et 74 agencées diagonalement dans les cavités de mesure 4, 5 sont déformées en compression faisant diminuer d'une amplitude similaire les résistances respectives R1 et R4 (figure 8b). On conserve donc sensiblement R1*R3=R2*R4. Par conséquent, la déformation du porte-plaquette liée à la torsion du porte-plaquette ne déséquilibre quasiment pas le pont de Wheatstone.

Ce câblage permet donc de limiter l'influence de l'effort de torsion exercé sur le porte-plaquette sur la mesure de l'effort tangentiel de coupe.

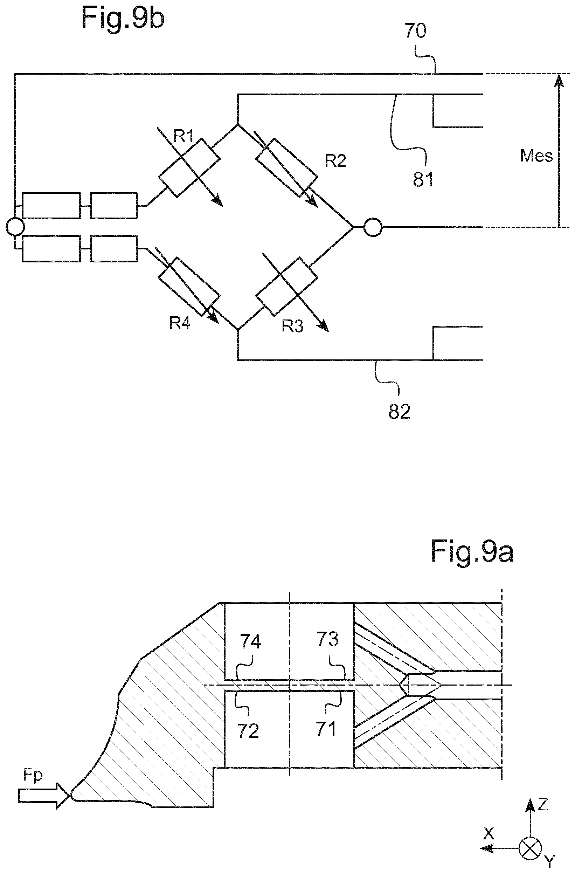

On a représenté sur la figure 9a, l'effort de pénétration Fp qui peut être exercé sur le porte-plaquette 1 simultanément à l'effort tangentiel de coupe. L'effort de pénétration Fp applique une poussée longitudinale sur la plaquette de coupe 3.

Les quatre jauges de contraintes 71, 72, 73 et 74 sont déformées en compression faisant augmenter les quatre résistances respectives R1, R2, R3 et R4 d'une amplitude similaire (figure 9b). On conserve donc sensiblement R1*R3=R2*R4. Par conséquent, la déformation du porte-plaquette liée à l'effort de torsion du porte-plaquette ne déséquilibre quasiment pas le pont de Wheatstone. Ce câblage permet donc de limiter l'influence de l'effort de pénétration exercé sur le porte-plaquette sur la mesure de l'effort tangentiel de coupe.

Ce même porte-plaquette peut être utilisé pour la mesure de l'effort tangentiel de coupe de toutes les opérations de tournage extérieures (chariotage, dressage de face, contournage, filetage, gorges/tronçonnage, multidirectionnel (gorges & chariotage) ou intérieures (alésage, contournage d'intérieur, filetage, gorges), la direction de la composante de l'effort tangentiel de coupe du porte-plaquette (ou effort de coupe principal) étant toujours orthogonale au plan défini par la plaquette de coupe.

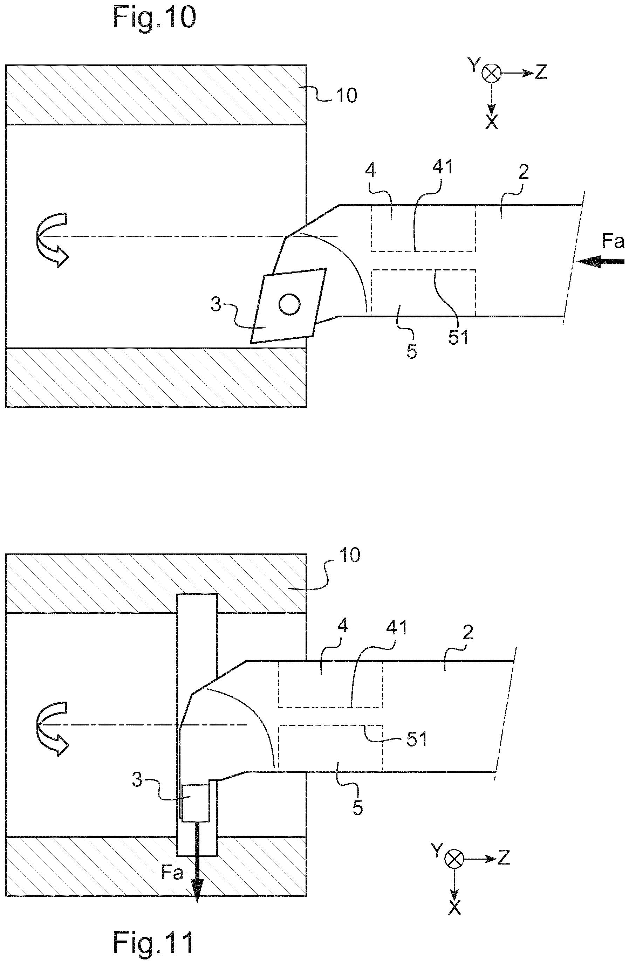

Ainsi, on a représenté sur la figure 10, un exemple de porte-plaquette et d'une pièce à usiner en tournage intérieur.

Les fonds plats 41, 51 des cavités de mesure 4, 5 sont parallèles à la direction Y de la composante de l'effort tangentiel de coupe du porte-plaquette à mesurer et parallèles à la direction longitudinale Z du corps de porte-plaquette 2.

La figure 11 montre un autre exemple de porte-plaquette et d'une pièce à usiner en tournage intérieur.

Les fonds plats 41, 51 des cavités de mesure 4, 5 sont parallèles à la direction Y de la composante de l'effort tangentiel de coupe du porte-plaquette à mesurer et parallèles à la direction longitudinale Z du corps de porte-plaquette 2.

Le porte-plaquette peut en outre comporter des plaques de fermeture 13 pour fermer de manière étanche les cavités de mesure 4, 5 et cavité de câblage 10 (figures 1 et 2). Les plaques de fermeture 13 permettent de protéger les jauges de contraintes, notamment des projections d'huile ou copeaux.

Les plaques de fermeture 13 sont par exemple oblongues ou circulaires selon la forme des ouvertures de cavité de mesure. L'épaisseur des plaques de fermeture 13 est inférieure à 1 millimètre, telle que de l'ordre de 3/10 mm pour conserver la souplesse du porte-plaquette permettant d'obtenir des mesures de bonne sensibilité.

Les plaques de fermeture 13 sont par exemple soudées au corps de porte-plaquette 2 autour des ouvertures des cavités de mesure 4, 5 et cavité de câblage 10. La soudure est par exemple réalisée par transparence par faisceau laser. On entend par soudage « par transparence », le fait de souder la plaque de fermeture 13 agencée dans un épaulement du corps de porte-plaquette 2 autour de l'ouverture en soudant au travers de la plaque de fermeture 13. On utilise préférentiellement l'acier inoxydable de type 1.4542 (17-4 PH). Le soudage laser permet notamment de réaliser des joints parfaitement étanches.

Selon un deuxième mode de réalisation, le corps de porte-plaquette 2 présente également au moins une paroi latérale plane 42, 52 perpendiculaire à la direction verticale Y de la composante de l'effort de coupe du porte-plaquette. Le porte-plaquette 1 comporte en outre au moins une deuxième jauge de contrainte 721, 722, 723, 724 configurée pour mesurer la déformation d'au moins une paroi latérale plane 42, 52.

En chariotage, la paroi latérale plane 42, 52 est parallèle à la composante de l'effort d'avance du porte-plaquette, la mesure des déformations de ces parois permet donc de mesurer un effort d'avance indépendamment de la mesure de l'effort tangentiel de coupe.

Les parois latérales planes 42, 52 sont par exemple formées dans des parois latérales des cavités de mesure 4, 5. Ainsi, deux cavités de mesure sont nécessaires plutôt que quatre.

Les cavités de mesure 4, 5 présentent alors par exemple une forme parallélépipédique à bout arrondis ou oblongue, de sorte que chaque cavité de mesure 4, 5 comporte à la fois un fond plat 41, 51 parallèle à la direction verticale Y de la composante de l'effort tangentiel de coupe du porte-plaquette à mesurer et deux parois latérales planes 42, 52 perpendiculaires à la direction verticale Y de la composante de l'effort de coupe du porte-plaquette à mesurer.

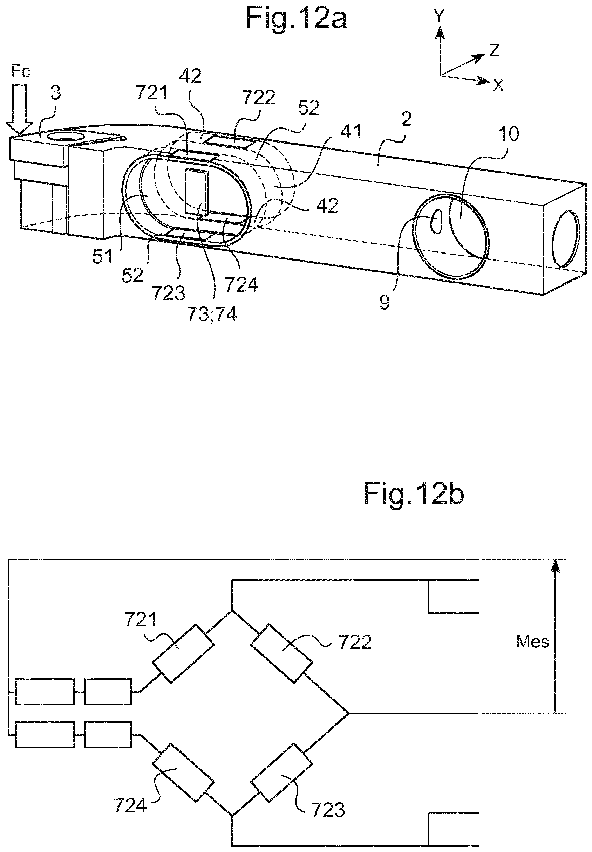

Par exemple et comme représenté sur la figure 12a, le porte-plaquette 1 comporte deux cavités de mesure de forme oblongue. Les parois latérales allongées des cavités de mesure 4, 5 oblongues présentent deux parois latérales planes 42, 52 en vis-à-vis, perpendiculaires à la direction verticale Y de la composante de l'effort de coupe.

Chaque cavité de mesure 4, 5 comporte d'une part, au moins une première jauge de contrainte, telle qu'une jauge double sapin 71, 72, pour la mesure des déformations en cisaillement des fonds plats 41, 51 ainsi qu'au moins une deuxième jauge de contrainte 721, 722, 723 et 724, pour la mesure des parois latérales planes 42, 52.

Les deuxièmes jauges de contraintes 721, 722, 723 et 724 sont par exemple des jauges de contraintes d'extension classiques.

Par exemple, chaque cavité de mesure 4, 5 comporte deux premières jauges de contraintes 721, 722, 723 et 724 respectivement collées sur une paroi latérale plane 42, 52(figure 12a).

Les quatre deuxièmes jauges de contraintes 721, 722, 723 et 724 sont reliées en pont complet de Wheatstone (figures 12a et 12b).

Les deuxièmes jauges de contraintes 721, 723 raccordées dans des branches opposées du pont de Wheatstone sont agencées dans la première cavité de mesure 5, l'une en regard de l'autre dans la direction verticale Y de la composante de l'effort tangentiel de coupe du porte-plaquette. De même, les deuxièmes jauges de contraintes 722, 724 raccordées dans des branches opposées du pont de Wheatstone sont agencées dans la deuxième cavité de mesure 4, l'une en regard de l'autre dans la direction verticale Y de la composante de l'effort tangentiel de coupe du porte-plaquette.

Avec ce câblage particulier, il est possible de mesurer l'effort d'avance seul exercé sur le porte-plaquette en limitant l'influence des efforts de coupe tangentiel, de pénétration et de torsion.

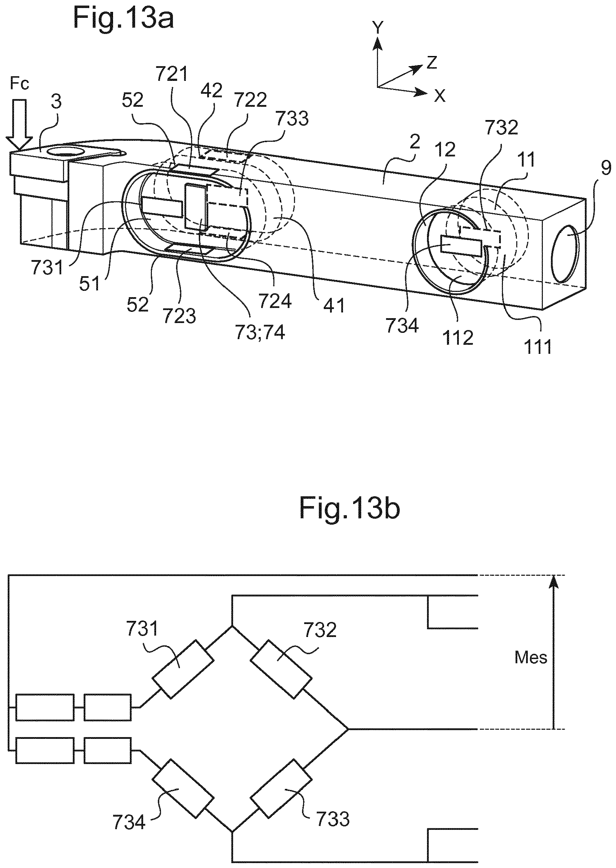

Selon un troisième mode de réalisation représenté sur les figures 13a, 13b, le porte-plaquette comporte deux cavités de mesure supplémentaires 11, 12 ménagées dans le corps de porte-plaquette 2, présentant respectivement au moins un fond plat 111, 112 dans le plan (X, Y) parallèle à la direction verticale Y de la composante de l'effort tangentiel de coupe du porte-plaquette 1. Les fonds plats 111, 112 des cavités de mesure supplémentaires 11, 12 sont alignés et longitudinalement décalés des fonds plats 41, 51 respectifs des cavités de mesure 4, 5.

Les cavités de mesure supplémentaires 11, 12 sont agencées symétriquement par rapport à la fibre neutre 6 du corps de porte-plaquette 2. Elles sont centrées sur la fibre neutre 6, c'est-à-dire qu'elles sont elles-mêmes respectivement agencées symétriquement par rapport à la fibre neutre 6. Elles présentent par exemple une forme générale cylindrique. L'axe des cavités de mesure supplémentaires 11, 12 cylindriques (ou hauteur) s'étend suivant une direction parallèle à l'axe de rotation Z.

Le porte-plaquette comporte en outre au moins un troisième capteur de déformation 731, 732, 733 et 734 configuré pour mesurer la déformation du fond plat 41, 51 d'au moins une cavité de mesure 4, 5 et la déformation du fond plat 111, 112 d'au moins une cavité de mesure supplémentaire 11, 12.

Par exemple, chaque cavité de mesure 4, 5 comporte d'une part, au moins une première jauge de contrainte, telle qu'une jauge double sapin 71, 72, 73, 74 pour la mesure des déformations en cisaillement des fonds plats 41, 51 ainsi qu'au moins une troisième jauge de contrainte 731 et 733, pour la mesure des déformations en compression/extension des fonds plats 41, 51. Les cavités de mesure supplémentaires 11 et 12 comportent chacune une troisième jauge de contrainte 732 et 734 pour la mesure des déformations en compression/extension des fonds plats 111, 112.

Les quatre troisièmes jauges de contraintes 731, 732, 733 et 734 sont agencées symétriquement par rapport à la fibre neutre 6. Les troisièmes jauges de contraintes 731, 734 et 732 et 733 sont alignées deux à deux suivant la direction longitudinale X du porte-plaquette (figure 13a).

Les troisièmes jauges de contraintes 731, 732, 733 et 734 sont par exemple des jauges de contraintes d'extension classiques.

En chariotage, on peut donc mesurer un effort de pénétration indépendamment de la mesure de l'effort tangentiel de coupe.

Les quatre troisièmes jauges de contrainte 731, 732, 733 et 734 sont par exemple reliées en pont complet de Wheatstone (figure 13b).

Les troisièmes jauges de contraintes 731, 733 raccordées dans des branches opposées du pont de Wheatstone sont agencées de part et d'autre de l'âme du corps du porte-plaquette. De même, les troisièmes jauges de contraintes 732, 734 raccordées dans des branches opposées du pont de Wheatstone sont agencées de part et d'autre de l'âme du corps du porte-plaquette.

Avec ce câblage particulier, il est possible de mesurer l'effort de pénétration seul exercé sur le porte-plaquette en limitant l'influence des efforts de coupe tangentiel, d'avance et de torsion.

On étend ainsi la possibilité de mesure des efforts de coupe sur des opérations d'usinage qui requièrent une faible puissance de coupe par un agencement et un câblage astucieux des jauges de contrainte, permettant d'obtenir une mesure des efforts de coupe précise et indépendante des déformations des autres efforts qui s'exercent également sur le porte-plaquette.

Bien que les deuxièmes et troisièmes modes de réalisation aient été décrits pour un outil de tournage en chariotage, les porte-plaquettes peuvent aussi être utilisés pour d'autres opérations de tournage.

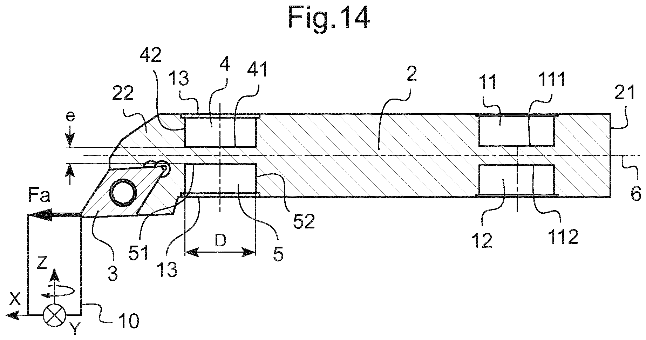

Le porte-plaquette peut par exemple être utilisé pour des opérations de dressage de face comme schématisé sur la figure 14.

Pour des opérations de dressage de face, les parois latérales planes 42, 52 des cavités de mesure 4, 5, parallèles à l'axe Z alors parallèle à la direction de la composante de l'effort de pénétration du porte-plaquette, permettent de mesurer un effort de pénétration indépendamment de la mesure de l'effort tangentiel de coupe.

Egalement, en dressage de face, les fonds plats 111, 112 des cavités de mesure supplémentaires 11, 12, parallèles à l'axe X alors parallèle à la composante de l'effort d'avance du porte-plaquette, permettent de mesurer un effort d'avance indépendamment de la mesure de l'effort tangentiel de coupe.

## Revendications

1. Porte-plaquette pour outil de tournage de machine-outil comportant un corps de porte-plaquette (2) dont la tête (22) est destinée à recevoir une plaquette de coupe (3), au moins deux cavités de mesure (4, 5) étant ménagées dans le corps de porte-plaquette (2) du côté de la tête (22), lesdites cavités de mesure (4, 5) étant centrées sur la fibre neutre (6), les cavités de mesure (4, 5) présentant respectivement un fond plat (41, 51) parallèle à la direction (Y) de la composante de l'effort tangentiel de coupe du porte-plaquette à mesurer et parallèle à la direction longitudinale (X ; Z) du corps de porte-plaquette (2), le porte-plaquette comportant en outre au moins une première jauge de contrainte (71, 72, 73, 74) **caractérisé en ce que** lesdites cavités de mesure (4, 5) sont agencées de façon symétrique par rapport à la fibre neutre (6) du corps de porte-plaquette (2), la au moins une première jauge de contrainte (71, 72, 73, 74) étant configurée pour mesurer la déformation du fond plat (41, 51) d'au moins une des deux cavités de mesure (4, 5).

2. Porte-plaquette selon la revendication 1, **caractérisé en ce que** l'épaisseur (e) de l'âme du corps de porte-plaquette (2) entre les fonds plats (41, 51) respectifs des cavités de mesure (4, 5) est comprise entre 2 et 10 millimètres et **en ce que** le rapport e/D entre l'épaisseur e de l'âme du corps de porte-plaquette (2) et la dimension longitudinale D de la cavité de mesure (4, 5) est compris entre 0,1 et 0,85.

3. Porte-plaquette selon la revendication 1, **caractérisé en ce que** l'épaisseur de l'âme du corps de porte-plaquette (2) entre les fonds plats (41, 51) respectifs des cavités de mesure (4, 5) est comprise entre 4 et 8 millimètres et **en ce que** le rapport e/D entre l'épaisseur e de l'âme du corps de porte-plaquette (2) et la dimension longitudinale D de la cavité de mesure (4, 5) est compris entre 0,3 et 0,5.

4. Porte-plaquette selon l'une des revendications précédentes, **caractérisé en ce qu'**il comporte au moins quatre premières jauges de contraintes (71, 72, 73, 74) reliées en pont complet de Wheatstone, les premières jauges de contraintes (71, 72, 73, 74) raccordées dans des branches opposées du pont de Wheatstone étant agencées dans une cavité de mesure (4, 5) distincte et se superposant de part et d'autre de l'âme du corps de porte-plaquette (2).

5. Porte-plaquette selon l'une des revendications précédentes, **caractérisé en ce que** les premières jauges de contraintes (71, 72, 73, 74) sont associées deux à deux pour mesurer la déformation du fond plat (41, 51) en formant une jauge double « sapin » pour laquelle les directions longitudinales des fils résistifs des deux premières jauges de contrainte (71, 72, 73, 74) respectives sont agencés « en V », lesdits fils résistifs étant sensiblement centrés par rapport à la fibre neutre (6) et alignés sur la fibre neutre (6).

6. Porte-plaquette selon l'une des revendications précédentes, **caractérisé en ce que** le corps de porte-plaquette (2) présente également au moins une paroi latérale plane (42, 52) perpendiculaire à la direction (Y) de la composante de l'effort de coupe du porte-plaquette, le porte-plaquette comportant en outre au moins une deuxième jauge de contrainte (721, 722, 723, 724) configurée pour mesurer la déformation d'au moins une paroi latérale plane.

7. Porte-plaquette selon la revendication 6, **caractérisé en ce que** les parois latérales planes (42, 52) sont formées dans des parois latérales d'une cavité de mesure (4, 5).

8. Porte-plaquette selon l'une des revendications 6 ou 7, **caractérisé en ce qu'**il comporte au moins quatre deuxièmes jauges de contraintes (721, 722, 723, 724) reliées en pont complet de Wheatstone, les deuxièmes jauges de contraintes (721, 722, 723, 724) raccordées dans des branches opposées du pont de Wheatstone étant agencées l'une en regard de l'autre dans la direction (Y) de la composante de l'effort tangentiel de coupe du porte-plaquette et configurées pour mesurer une paroi latérale plane (42, 52).

9. Porte-plaquette selon l'une des revendications précédentes, **caractérisé en ce qu'**il comporte :
- deux cavités de mesure supplémentaires (11, 12) ménagées dans le corps de porte-plaquette (2) présentant respectivement au moins un fond plat (111, 112) aligné et décalé longitudinalement du fond plat (41, 51) des cavités de mesure (4, 5), et
- au moins un troisième capteur de déformation (731, 732, 733, 734) configuré pour mesurer la déformation d'au moins un fond plat (41, 51) d'une cavité de mesure (4, 5) et la déformation d'au moins un fond plat (111, 112) d'une cavité de mesure supplémentaire (11, 12).

10. Porte-plaquette selon l'une des revendications précédentes, **caractérisé en ce qu'**il comporte au moins une plaque de fermeture (13) pour fermer de manière étanche les cavités de mesure (4, 5).

11. Porte-plaquette selon l'une des revendications précédentes, **caractérisé en ce qu'**un conduit interne (9) raccordé aux cavités de mesure (4, 5) est ménagé dans le corps de porte-plaquette (2) pour le passage des fils de connexion (70) du(des) jauge(s) de contrainte, ledit conduit interne (9) débouchant en bout du corps de porte-plaquette (2).

## Patentansprüche

1. Plattenträger für ein Drehwerkzeug einer Werkzeugmaschine, der einen Plattenträgerkörper (2) aufweist, dessen Kopf (22) dazu bestimmt ist, eine Schneidplatte (3) aufzunehmen, wobei mindestens zwei Messhohlräume (4, 5) im Plattenträgerkörper (2) auf der Seite des Kopfs (22) ausgespart sind, wobei die Messhohlräume (4, 5) auf die neutrale Faser ((1) zentriert sind, wobei die Messhohlräume (4, 5) je einen flachen Boden (41, 51) parallel zur Richtung (Y) der Komponente der zu messenden tangentialen Schnittkraft des Plattenträgers und parallel zur Längsrichtung (X; Z) des Plattenträgerkörpers (2) aufweisen, wobei der Plattenträger außerdem mindestens einen ersten Dehnungsmessstreifen (71, 72, 73, 74) aufweist, **dadurch gekennzeichnet, dass** die Messhohlräume (4, 5) bezüglich der neutralen Faser (6) des Plattenträgerkörpers (2) symmetrisch angeordnet sind, wobei der mindestens eine erste Dehnungsmessstreifen (71, 72, 73, 74) konfiguriert ist, die Verformung des flachen Bodens (41, 51) mindestens eines der zwei Messhohlräume (4, 5) zu messen.

2. Plattenträger nach Anspruch 1, **dadurch gekennzeichnet, dass** die Dicke (e) des Stegs des Plattenträgerkörpers (2) zwischen den flachen Böden (41, 51) der Messhohlräume (4, 5) zwischen 2 und 10 Millimeter liegt, und dass das Verhältnis e/D zwischen der Dicke e des Stegs des Plattenträgerkörpers (2) und der Längsabmessung D des Messhohlraums (4, 5) zwischen 0,1 und 0,85 liegt.

3. Plattenträger nach Anspruch 1, **dadurch gekennzeichnet, dass** die Dicke des Stegs des Plattenträgerkörpers (2) zwischen den flachen Böden (41, 51) der Messhohlräume (4, 5) zwischen 4 und 8 Millimeter liegt, und dass das Verhältnis e/D zwischen der Dicke e des Stegs des Plattenträgerkörpers (2) und der Längsabmessung D des Messhohlraums (4, 5) zwischen 0,3 und 0,5 liegt.

4. Plattenträger nach einem der vorhergehenden Ansprüche, **dadurch gekennzeichnet, dass** er mindestens vier erste Dehnungsmessstreifen (71, 72, 73, 74) aufweist, die in einer vollständigen Wheatstone-Brücke verbunden sind, wobei die in gegenüberliegenden Schenkeln der Wheatstone-Brücke angeschlossenen ersten Dehnungsmessstreifen (71, 72, 73, 74) in einem getrennten Messhohlraum (4, 5) angeordnet sind und zu beiden Seiten des Stegs des Plattenträgerkörpers (2) übereinander liegen.

5. Plattenträger nach einem der vorhergehenden Ansprüche, **dadurch gekennzeichnet, dass** die ersten Dehnungsmessstreifen (71, 72, 73, 74) paarweise verbunden sind, um die Verformung des flachen Bodens (41, 51) zu messen, indem sie einen doppelten "tannenbaumförmigen" Messstreifen bilden, bei dem die Längsrichtungen der Widerstandsdrähte der zwei ersten Dehnungsmessstreifen (71, 72, 73, 74) "V"-förmig angeordnet sind, wobei die Widerstandsdrähte in Bezug auf die neutrale Faser (6) im Wesentlichen zentriert und auf die neutrale Faser (6) ausgerichtet sind.

6. Plattenträger nach einem der vorhergehenden Ansprüche, **dadurch gekennzeichnet, dass** der Plattenträgerkörper (2) ebenfalls mindestens eine ebene Seitenwand (42, 52) lotrecht zur Richtung (Y) der Komponente der Schnittkraft des Plattenträgers aufweist, wobei der Plattenträger außerdem mindestens einen zweiten Dehnungsmessstreifen (721, 722, 723, 724) aufweist, der konfiguriert ist, die Verformung mindestens einer ebenen Seitenwand zu messen.

7. Plattenträger nach Anspruch 6, **dadurch gekennzeichnet, dass** die ebenen Seitenwände (42, 52) in ebenen Seitenwänden eines Messhohlraums (4, 5) geformt sind.

8. Plattenträger nach einem der Ansprüche 6 oder 7, **dadurch gekennzeichnet, dass** er mindestens vier zweite Dehnungsmessstreifen (721, 722, 723, 724) aufweist, die als vollständige Wheatstone-Brücke verbunden sind, wobei die in gegenüberliegenden Schenkeln der Wheatstone-Brücke angeschlossenen zweiten Dehnungsmessstreifen (721, 722, 723, 724) in der Richtung (Y) der Komponente der tangentialen Schnittkraft des Plattenträgers einander gegenüber angeordnet und konfiguriert sind, eine ebene Seitenwand (42, 52) zu messen.

9. Plattenträger nach einem der vorhergehenden Ansprüche, **dadurch gekennzeichnet, dass** er aufweist:
- zwei im Plattenträgerkörper (2) ausgesparte zusätzliche Messhohlräume (11, 12), die je mindestens einen ebenen Boden (111, 112) aufweisen, der zum ebenen Boden (41, 51) der Messhohlräume (4, 5) ausgerichtet und in Längsrichtung versetzt ist, und
- mindestens einen dritten Verformungssensor (731, 732, 733, 734) der konfiguriert ist, die Verformung mindestens eines ebenen Bodens (41, 51) eines Messhohlraums (4, 5) und die Verformung mindestens eines ebenen Bodens (111, 112) eines zusätzlichen Messhohlraums (11, 12) zu messen.

10. Plattenträger nach einem der vorhergehenden Ansprüche, **dadurch gekennzeichnet, dass** er mindestens eine Verschlussplatte (13) aufweist, um die Messhohlräume (4, 5) dicht zu verschließen.

11. Plattenträger nach einem der vorhergehenden Ansprüche, **dadurch gekennzeichnet, dass** ein an die Messhohlräume (4, 5) angeschlossener innerer Kanal (9) im Plattenträgerkörper (2) für den Durchgang der Anschlussdrähte (70) des Dehnungsmessstreifens/der Dehnungsmessstreifen ausgespart ist, wobei der innere Kanal (9) am Ende des Plattenträgerkörpers (2) mündet.

## Claims

1. Insert holder for a machine tool turning tool including an insert holder body (2) the head (22) of which is intended to receive a cutting insert (3), at least two measurement cavities (4, 5) being formed in the insert holder body (2) at the head (22) end, said measurement cavities (4, 5) centered on the neutral fiber (6), each of the measurement cavities (4, 5) having a respective flat bottom (41, 51) parallel to the direction (Y) of the component of the tangential cutting force of the insert holder to be measured and parallel to the longitudinal direction (X; Z) of the insert holder body (2), the insert holder further including at least one first strain gage (71, 72, 73, 74), **characterized in that** said measurement cavities (4, 5) are symmetrically arranged relative to the neutral fiber (6) of the insert holder body (2), the at least one first strain gage (71, 72, 73, 74) being configured to measure the deformation of the flat bottom (41, 51) of at least one of the two measurement cavities (4, 5).

2. Insert holder according to Claim 1, **characterized in that** the thickness (e) of the core of the insert holder body (2) between the respective flat bottoms (41, 51) of the measurement cavities (4, 5) is between 2 and 10 millimeters and **in that** the ratio e/D between the thickness e of the core of the insert holder body (2) and the longitudinal dimension D of the measurement cavity (4, 5) is between 0.1 and 0.85.

3. Insert holder according to Claim 1, **characterized in that** the thickness of the core of the insert holder body (2) between the respective flat bottoms (41, 51) of the measurement cavities (4, 5) is between 4 and 8 millimeters and **in that** the ratio e/D between the thickness e of the core of the insert holder body (2) and the longitudinal dimension D of the measurement cavity (4, 5) is between 0.3 and 0.5.

4. Insert holder according to any one of the preceding claims, **characterized in that** it includes at least four first strain gages (71, 72, 73, 74) connected in a complete Wheatstone bridge, the first strain gages (71, 72, 73, 74) connected in the opposite branches of the Wheatstone bridge being arranged in a separate measurement cavity (4, 5) and being superposed on respective opposite sides of the core of the insert holder body (2).

5. Insert holder according to any one of the preceding claims, **characterized in that** the first strain gages (71, 72, 73, 74) are associated in pairs to measure the deformation of the flat bottom (41, 51) by forming a double "Christmas tree" gage for which the longitudinal directions of the resistive wires of the respective first two strain gages (71, 72, 73, 74) are arranged in a "V", said resistive wires being substantially centered relative to the neutral fiber (6) and aligned on the neutral fiber (6).

6. Insert holder according to any one of the preceding claims, **characterized in that** the insert holder body (2) also has at least one plane lateral wall (42, 52) perpendicular to the direction (Y) of the component of the cutting force of the insert holder, the insert holder further including at least one second strain gage (721, 722, 723, 724) configured to measure the deformation of at least one plane lateral wall.

7. Insert holder according to Claim 6, **characterized in that** the plane lateral walls (42, 52) are formed in lateral walls of a measurement cavity (4, 5).

8. Insert holder according to either one of Claims 6 and 7, **characterized in that** it includes at least four second strain gages (721, 722, 723, 724) connected in a complete Wheatstone bridge, the second strain gages (721, 722, 723, 724) connected in opposite branches of the Wheatstone bridge being arranged facing one another in the direction (Y) of the component of the tangential cutting force of the insert holder and configured to measure a plane lateral wall (42, 52).

9. Insert holder according to any one of the preceding claims, **characterized in that** it includes:
- two additional measurement cavities (11, 12) in the insert holder body (2) having at least one respective flat bottom (111, 112) aligned with and offset longitudinally from the flat bottom (41, 51) of the measurement cavities (4, 5), and
- at least one third deformation sensor (731, 732, 733, 734) configured to measure the deformation of at least one flat bottom (41, 51) of a measurement cavity (4, 5) and the deformation of at least one flat bottom (111, 112) of an additional measurement cavity (11, 12).

10. Insert holder according to any one of the preceding claims, **characterized in that** it includes at least one closure plate (13) for closing and sealing the measurement cavities (4, 5).

11. Insert holder according to any one of the preceding claims, **characterized in that** an internal duct (9) connected to the measurement cavities (4, 5) is formed in the insert holder body (2) for the connecting wires (70) of the strain gage(s), said internal duct (9) opening onto the end of the insert holder body (2).
